# EUROPÄISCHE PATENTSCHRIFT

(11) **EP 3 012 581 B1**
(45) Veröffentlichungstag und Bekanntmachung des Hinweises auf die Patenterteilung: **29.03.2017**
(21) Anmeldenummer: 14189962.5
(22) Anmeldetag: 22.10.2014
(51) Int. Cl.: G01C 15/00, G01C 15/02, G01C 3/08

(54) **Anzielvorrichtung für elektro-optische Vermessungsgeräte**
Sighting device for electro-optical measurement devices
Dispositif de ciblage pour appareils de mesure opto-électriques

(43) Veröffentlichungstag der Anmeldung: 27.04.2016
(73) Patentinhaber: Leica Geosystems AG, 9435 Heerbrugg (CH)
(72) Erfinder: Schroeder, Frank, CH-9000 St.Gallen (CH); Orman, Canpolat, A-6850 Dornbirn (AT)
(74) Vertreter: Gyaja, Christoph Benjamin

(56) Entgegenhaltungen:
- EP-A2- 1 054 266
- US-A- 2 579 644
- US-B1- 7 042 555

## Beschreibung

Die vorliegende Erfindung betrifft eine Anzielvorrichtung für elektro-optische Vermessungsgeräte nach dem Oberbegriff des Anspruchs 1.

Bei der handwerksbezogenen Vermessung und Zuschneidung von horizontalen Werkstücken, wie z.B. Tisch- und Küchenarbeitsplatten aus Holz, Stein oder Glas, kommen neben konventionellen analogen Messmitteln immer häufiger auch elektro-optische Vermessungsgeräte, insbesondere Distanzmessgeräte zum Einsatz.

Gattungsgemässe elektro-optische Vermessungsgeräte, insbesondere handhaltbare Laser-Distanzmessgeräte wie beispielsweise in der WO 2005/083465, EP 0 738 899 und der EP 0 701 702 beschrieben, zum optischen Messen von Distanzen werden heutzutage in grosser Anzahl für unterschiedlichste Anwendungen, insbesondere im Handwerk und im Bauwesen, eingesetzt. Mit ihnen können Distanzen, beispielsweise zwischen einem Messanschlag des Messgeräts und einem natürlichen (d.h. mit dem Vermessungsgerät nicht kooperierenden) Zielobjekt, innerhalb eines Distanzmessbereichs von einigen Zentimetern bis zu beispielsweise 30 Metern mit einer sehr hohen Genauigkeit optisch gemessen werden.

Zusätzlich kann das elektro-optische Vermessungsgerät mit einer Winkelbestimmungseinheit zur Bestimmung von Raumwinkeln in Relation zu einem Referenzkoordinatensystem ausgestattet sein, mittels welchem dreidimensionale Koordinaten von Raumpunkten bestimmt und angezeigt werden können. Ein solches handhaltbares Entfernungsmessgerät kann zu diesem Zweck eine Referenzierungsstütze aufweisen, mit welcher Winkel und Ausrichtungsänderungen des Entfernungsmessgerätes relativ zu einem zum Referenzkoordinatensystem feststehenden externen Referenzobjekt bestimmt werden können. Die räumliche Ausrichtung des Entfernungsmessgerätes gegenüber dem Referenzobjekt ist insbesondere über Winkelmesser erfassbar. Auch können zusätzlich Neigungssensoren zur Bestimmung der Ausrichtung bezüglich des Schwerefeld-Vektors der Erde vorgesehen sein.

In einer üblichen Ausführungsform eines solchen Messgerätes werden über eine Optik modulierte optische Strahlen als Sendestrahlen bzw. Messlichtstrahlen gegen das zu messende Zielobjekt ausgesendet. Wenigstens ein Teil der Messlichtstrahlen wird vom Oberflächenbereich des natürlichen Zielobjekts in Richtung des Messgeräts zurück reflektiert - im Gegensatz zu einem mit dem Vermessungsgerät kooperierenden Zielobjekt, wie z.B. einem Katzenauge oder einem Reflektor, deren Funktion es ist, den Messstrahl komplett zu reflektieren. Über die Optik werden vom besagten Oberflächenbereich reflektierte Strahlen (insbesondere beabstandet zu den Sendestrahlen) wieder eingesammelt und von einem Empfänger der Vorrichtung in ein elektrisches Signal umgewandelt. Bekannte derartige elektro-optische Messgeräte und Distanzmessverfahren beruhen auf einer Messung der Laufzeit eines zeitlichen Lichtpulses oder einer Messung der Phasenverschiebung eines von dem Zielobjekt reflektierten Laserstrahls. Bei der Laufzeitmessung wird die Pulslaufzeit von der Laserlichtquelle zum Zielobjekt und zurück zu einem Empfänger gemessen wodurch eine äusserst geringe erforderliche Messzeit realisiert werden kann.

Elektro-optische Messgeräte und Distanzmessverfahren basieren weiters z.B. auf Messung der Phase des reflektierten Laserlichts und beruhen auf der Tatsache, dass die Phasenverschiebung des reflektierten Laserstrahls oder dessen Modulation gegenüber dem ausgesandten Strahl entfernungsabhängig ist. Weil das Laserlicht mit einem Strahldurchmesser behaftet ist, wird es stets flächig projiziert und entsprechend reflektiert. Für die Berechnung der Distanz wird daher ein Durchschnittswert über den Strahlquerschnitt herangezogen.

Treffen zum Beispiel Teile des Laserstrahls auf eine Kante oder Ecke, andere Teile jedoch auf die weiter hinten liegenden Flächen, so liegt die gemittelte Distanz dann "im Tisch" und ist damit also zu lang. Entsprechend ist bei der Vermessung eines Winkels ("innere Kante") die gemessene Distanz zu kurz, da die von den weiter vorn liegenden Flächen reflektierten Strahlen mit in die Mittelwertsberechnung einfliessen.

Trifft zum Beispiel der Laserstrahl in einem sehr flachen Winkel auf eine Oberfläche, erscheint er noch flächiger, z.B. als lang gezogene Ellipse. Bei korrekter Anzielung mit der Mitte der Ellipse ist die anschliessend gemessene Distanz zwar korrekt, jedoch kann besagte Mitte nur schwer mit blossem Auge erkannt und ein Messstrahl damit sehr schlecht manuell ausgerichtet werden. Zu den oben beschriebenen Messfehlern kommt also damit noch hinzu, dass ein korrektes Anvisieren erschwert sein kann. Gerade beim Einsatz solch präziser Technologie ist es aber wichtig, dass das Zielobjekt leicht anvisierbar ist, um dann exakt vermessen werden zu können.

Allerdings können direkt auf dem Messgerät bzw. Betrachter zugewandten und zu vermessende Kanten und Ecken, sowie im flachen Winkel auf Oberflächen gerichtete Strahlen sehr leicht das exakte Ziel geringfügig verfehlen, weil sie daran sehr schwer ausrichtbar sind. Diese zusätzlichen Anzielfehler können in der sich anschliessenden Messung abweichende Distanzdaten liefern, die für manche Anwendungen inakzeptabel sind.

Wird eine dem Messgerät bzw. Betrachter zugewandte Kante oder Ecke anvisiert, so kann es - insbesondere aus weiterer Entfernung - eine Herausforderung sein, den Messstrahl präzise auf den zu vermessenden Punkt an der Kante oder Ecke (im Regelfall: die Kantenlinie bzw. der Eckpunkt) auszurichten. Hier ist nicht einfach beurteilbar, ob nun die Mitte des Strahls genau auf der Kante bzw. der Ecke liegt.

Potentiell zusätzlich erschwert ist die Vermessung einer nicht rechtwinkligen Kante, in welcher beispielsweise die Kantenlinie nicht der äusserste Punkt der Tischkante ist. Ist nämlich dieser äusserste Punkt für die Vermessung von Interesse, besteht hierbei die Gefahr, dass dieser ebenfalls nicht einfach erkennbar und anvisierbar ist, wie es beispielsweise bei einer abgerundeten Tischkante der Fall ist, deren äusserster Punkt visuell nicht ohne Weiteres ermittelbar ist. Gleiches gilt für eine dem Messgerät bzw. Betrachter zugewandte Ecke, deren Eckenspitze anvisiert werden soll.

Ebenfalls schwierig oder teils gar nicht anvisierbar sind dem Vermessungsgerät bzw. Betrachter abgewandte zu vermessende Oberflächen, Kanten oder Ecken, was zum Beispiel beim Vermessen einer abgewandten Tischplattenkante auftreten kann, die man von der gegenüberliegenden Tischplattenkante aus mit einem elektro-optischen Vermessungsgerät messen möchte.

Abgesehen von den oben beschriebenen Problematiken wäre ausserdem ein Messergebnis nur dann korrekt, wenn die sichtbare und angezielte Kante auch tatsächlich das Tischplattenende repräsentiert, welches vermessen werden soll. Dies wäre bei einer im Wesentlichen nicht abgerundeten und im mindestens 90° betragenden Winkel abfallenden Kante der Fall. Manche Kantenprofile sind aber nicht direkt messbar, weil sie etwa eine gefaste, schräge (Abfallwinkel > 90°), oder mit Krümmungsradius versehene Kante besitzen, sodass der äusserste Punkt des Tischplattenendes vom Vermessungsgerät aus nicht direkt sichtbar und damit nicht vermessbar ist.

Gleiches gilt für eine dem Messgerät bzw. Betrachter abgewandte Ecke, deren Eckenspitze anvisiert werden soll.

Die US2579644 offenbart eine Anzielvorrichtung, die mittels eines Theodoliten anvisiert wird.

Eine Aufgabe der Erfindung ist es daher, eine Anzielvorrichtung zur Verfügung zu stellen, die einen zu vermessenden Punkt repräsentiert und mit der das erleichterte und präzisere Messen einer Kante möglich ist. Eine weitere Aufgabe der Erfindung ist es, eine Anzielvorrichtung zur Verfügung zu stellen, mit der das korrekte Messen innerer und äusserer Ecken möglich ist.

Eine weitere Aufgabe der Erfindung ist es, eine Anzielvorrichtung zur Verfügung zu stellen, mit der das präzise Messen schräger, gerader, konvexer, konkaver und profilierter Kanten von jeder Position aus möglich ist.

Eine weitere Aufgabe der Erfindung ist es, eine Anzielvorrichtung zur Verfügung zu stellen, mit der das korrekte Messen der Position oder Höhe von Punkten auf einer Fläche möglich ist.

Diese Aufgaben werden durch die Gegenstände des Anspruches 1 oder der abhängigen Ansprüche gelöst bzw. die Lösungen weitergebildet.

Die Erfindung betrifft eine zur händischen Bedienung vorgesehene Anzielvorrichtung. Die Anzielvorrichtung soll dabei ein Substitutionsziel natürlicher Gestalt bereitstellen und ist für die Einzelpunktmessung von Oberflächenpunkten mit einem elektro-optischen Vermessungsgerät vorgesehen.

Von den Komponenten weist die erfindungsgemässe Anzielvorrichtung wenigstens auf
- eine Trägerplatte mit mindestens einem Einstecksitz und
- eine (eigentliche) Zieltafel,
wobei die Zieltafel in den Einstecksitz der Trägerplatte einsteckbar ist.

Die Zieltafel umfasst dabei bzw. stellt bereit
- mindestens eine definierte Anlegestelle zum Angelegtwerden an den zu vermessenden Oberflächenpunkt und
- mindestens einer Anzielmarkierung.

Erfindungsgemäss steht nun die mindestens eine Anzielmarkierung bezüglich ihrer Position auf der Zieltafel genau so mit der mindestens einen definierten Anlegestelle in vordefinierter räumlicher Korrelation, dass in eingestecktem und an den Oberflächenpunkt angelegtem Zustand der Anzielvorrichtung ein solcher - durch die Anzielmarkierung verkörperter - Raumpunkt vermessbar ist, der die wahre Position des Oberflächenpunktes mit einem
- vordefinierten und
- vom Vermessungsgerät zumindest teilweise automatisch in die Messung einbeziehbaren
   Versatz beschreibt.

Die Zieltafel stellt also ein natürliches, nichtkooperierendes Ersatzziel mit grundsätzlich ähnlichen Reflexionseigenschaften wie eine natürliche Oberfläche (etwa von Wänden, Tischen, Türrahmen, Fensterrahmen, Böden, Decken, etc) bereit, das - für den Fall einer schweren Zugänglichkeit eines Oberflächenpunkten oder eines potentiell zu erwartenden Messfehlers beim direkten Anmessen des Oberflächenpunkts - dass ersatzweise direkt vom Messgerät mit dem Mess-Laserstrahl angezielt und positionell vermessen werden kann.

Das Offset des dann tatsächlich vermessenen Ersatzpunktes auf der Zieltafel zum eigentlich zu vermessen gewünschten Oberflächenpunkt ist vordefiniert (also bekannt) und kann direkt in die Messung einbezogen werden.

Die Anzielvorrichtung weist also eine definiert Zone auf, die zum Angelegtwerden an eine Oberfläche ausgebildet ist. Die dreidimensionalen Formen der Tafel und der Trägerplatte (in zusammengestecktem Zustand) sind so ausgestaltet und so aufeinander abgestimmt, dass für unterschiedliche typische Messsituationen (Innenkantenmessung, Aussenkantenmessung, etc.) vordefinierte Anlagezonen (also Anlageflächen oder Anlagekanten, die dann auch die spezielle Anlagestelle definieren) für eine oder mehrere bestimmte Oberflächen des zu vermessenden Körpers ausgestaltet sind. Somit sind bevorzugt also verschiedene typische, häufig auftretende und als schwierig direkt messbar bekannte Punktmesssituationen abgedeckt, die erfindungsgemäss nun mit einfach herstellbaren und einfach handhabbaren Mitteln indirekt besser vermessen werden können (sozusagen "remote" über die an der Zieltafel vorhandene Anzielmarkierung).

Beispielsweise können die beiden Komponenten der erfindungsgemässen Anzielvorrichtung so ausgebildet sein, dass einerseits die Zieltafel für Transport- und/oder Verstauzwecke (etwa in der Hosentasche des Bedieners) in der Trägerplatte (bzw. einem überstehenden Rahmen der Trägerplatte) versenkbar ist (-> die Zieltafel liegt dann parallel auf der Trägerplatte auf) und andererseits die Zieltafel (im Betriebszustand) rechtwinklig zur Trägerplatte steht und die Trägerplatte dann für bestimmte Messsituationen zusätzlich als Stand/Stütze bzw. Anlagehilfsmittel dient.

Als Vermessungsgeräte, für die erfindungsgemässe Anzielvorrichtung geschaffen ist, kommen dabei hier insbesondere handhaltbare Laserdistanzmessgeräte oder vor allem Raumpunktvermessungsgeräte (insbesondere für Indoor-Vermessungen z.B. im Baubereich (Gebäudebau/ Innenausbau/Küchenplanung/Kücheneinbau/Fensterbau/etc.) infrage, wie dies vom Grundaufbau her beispielsweise in der EP 2 458 328 A1 oder der EP 2 453 205 A1 beschrieben ist. Derartige Vermessungsgeräte sind dabei eigentlich für das Vermessen von natürlichen Oberflächen (also eigentlich eben gerade nicht von Messhilfsmittel wie etwa Retroreflektoren oder andersartige speziell reflektierende Ziele, etc.) massgeschneidert.

Ein solches Konstruktionsvermessungsgerät ist typischerweise also ausgebildet zum Vermessen und Markieren von natürlichen Raumpunkten auf Oberflächen im Rahmen von Bau und/oder Ausbau - insbesondere Innenausbau - von Gebäuden (z.B. Küchenplanung/Kücheneinbau/Fensterbau/ Rohrverlegung/Treppenbau/Elektrikverlegung/etc.) und kann aufweisen:
- eine Basis,
- einem an der Basis um eine Drehachse drehbar gelagerten Oberteil,
- einer am Oberteil um eine Schwenkachse schwenkbar gelagerten, Distanzmessfunktionalität bereitstellenden Anzieleinheit mit einer zur Emission eines Laserstrahls ausgebildeten Laserquelle und einem Laserlicht-Detektor und
- einer Auswerte- und Steuereinheit.

Dabei ist bei einem solchen Gerät in der Regel vorgesehen, dass
- ein erster und ein zweiter Drehantrieb das Oberteil bzw. die Anzieleinheit antreib- und ausrichtbar machen,
- eine räumliche Ausrichtung der Anzieleinheit gegenüber der Basis über zwei Winkelmesser erfassbar ist und
- die Auswerte- und Steuereinheit mit der Laserquelle, dem Laserlicht-Detektor sowie den Winkelmessern verbunden ist, um eine erfasste Distanz einer entsprechenden Ausrichtung zuzuordnen und somit Koordinaten für Oberflächenraumpunkte zu bestimmen.

Die erfindungsgemässe Anzielvorrichtung weist also bevorzugt zwei zu montierende (also miteinander zu verbindende) Komponenten auf.

Die erste Komponente ist eine Trägerplatte mit Nischen und Durchlässen auf der Oberseite zum Verstauen und Einstecken der zweiten Komponente. Die Unterseite der Trägerplatte eignet sich zum ebenen Auflegen auf plane Flächen. Die Anzielvorrichtung kann damit sowohl auf horizontale Flächen aufgelegt als auch an nicht-horizontale Flächen, insbesondere Wänden, befestigt werden.

Die zweite Komponente ist eine Zieltafel mit mindestens einer, insbesondere vier eingeprägten und/oder aufgedruckten Referenzlinien als Anzielmarkierung. Die Referenzlinien sind so auf der Zieltafel platziert, dass sie - zum Beispiel in Form eines Fadenkreuzes - feste Offsetwerte in Bezug zur Oberfläche repräsentieren, auf der die Anzielvorrichtung aufliegt. Sind diese Offsetwerte dem Vermessungsgerät bekannt, so kann das Vermessungsgerät durch Berücksichtigung dieser Offsetwerte automatisch den eigentlich zu vermessenden Punkt bestimmen. Dadurch ergibt sich, trotz ursprünglich widriger Vermessungsumstände eine fehlerfreie 3D-Koordinate. Die Zieltafel ist derart ausgebildet, dass sie mit mindestens einer, bevorzugt drei ihrer vier stirnseitigen Enden jeweils in die Trägerplatte passgenau einsteckbar ist und dabei die Trägerplatte zumindest teilweise durchstösst. Diese stirnseitigen Enden verfügen über Absätze mit einer Kantenlänge, die kleiner ist als die Grundkantenlänge der Zieltafel. Die dadurch bestehenden schulterartigen Absätze, welche den Einschub der Zieltafel in die Trägerplatte längenmässig begrenzen, sind dabei dimensional abgestimmt auf die Referenzlinien. Der durchstossene und gegebenenfalls auf der anderen Seite wieder herausragende Teil der Zieltafel wird zum Ausrichten und/oder Anlegen der Anzielvorrichtung an bestimmten Oberflächenpunkten bzw. Ecken und Kanten benutzt.

Mindestens ein Teil der Zieltafel - bevorzugt einer der durchstossenen und auf der anderen Seite der Trägerplatte herausragenden Teile der Zieltafel - ist dabei derart orthogonal zur Referenzlinien aufweisenden Zieltafelebene abgesetzt oder versetzt, dass beim Anlegen und Ausrichten der Anzielvorrichtung an eine bzw. an einer Ecke oder Kante mindestens ein anvisierbarer Punkt auf der Referenzlinie in der Ebene des Anlegekontaktes zwischen Zieltafel und Ecke bzw. Kante liegt.

Die beiden Komponenten verfügen über mindestens fünf funktionale Montagezustände. Im ersten Montagezustand ist die Zieltafel flach in die Trägerplatte hineingelegt und z.B. mit einer Schnappnase reversibel eingeklemmt, um sie dort Platz sparend und vor Staub geschützt zu verstauen. In den weiteren vier Montagezuständen, die für das eigentliche Anzielen und Vermessen hergerichtet werden, ist die Zieltafel je unterschiedlich mittels einer ihrer stirnseitigen Enden in die Trägerplatte eingesteckt, so dass die Zieltafel aufrecht steht, wobei jeder dieser vier Montagezustände mindestens einen Vermessungsmodus ermöglicht. Diese unterschiedlichen Vermessungsmodi dienen der Bewältigung verschiedener Kombinationen von Vermessungsbedingungen:
- Der zu vermessende Punkt liegt auf einer Oberfläche, Kante oder Ecke.
- Der zu vermessende Punkt liegt an einer Stelle, die dem Vermessungsgerät zugewandt oder abgewandt ist.

Die Anzielvorrichtung kann auch einteilig ausgeführt sein, wodurch ihre Nutzbarkeit auf eine Anzahl von Vermessungsmodi begrenzt wird und der Platz sparende Montagezustand hinfällig ist.

Als Materialien für die Komponenten der Anzielvorrichtung sind - abhängig von den Ansprüchen an die Robustheit - beispielsweise Kunststoffe oder auch Metalle (vor allem Leichtmetalle) wählbar.

Die erfindungsgemässe Anzielvorrichtung wird nachfolgend anhand von in der Zeichnung schematisch dargestellten Ausführungsbeispielen rein beispielhaft näher beschrieben oder erläutert. Im Einzelnen zeigen
- Fig.1: die Anzielvorrichtung in einem ersten Montagezustand zum Verstauen der Zieltafel in der Trägerplatte;
- Fig.2: die Einsteckbewegung der Zieltafel in die Trägerplatte zum Bereitstellen eines zweiten Montagezustandes;
- Fig.3: die Anzielvorrichtung in einem dritten Montagezustand und einen dazugehörigen beispielhaften Vermessungsmodus auf einer Tischplattenoberfläche;
- Fig.4a: die Anzielvorrichtung in einem vierten Montagezustand und einen dazugehörigen ersten beispielhaften Vermessungsmodus an einer Tischplattenkante;
- Fig.4b: die Anzielvorrichtung im vierten Montagezustand und einen dazugehörigen zweiten beispielhaften Vermessungsmodus an einer Tischplattenecke;
- Fig.5a: die Anzielvorrichtung in einem fünften Montagezustand und einen dazugehörigen ersten beispielhaften Vermessungsmodus an einer gerundeten Tischplattenkante;
- Fig.5b: die Anzielvorrichtung im fünften Montagezustand und einen dazugehörigen zweiten beispielhaften Vermessungsmodus an einer Tischplattenkante;
- Fig.6a: den schräg auf eine Oberfläche auftreffenden Messstrahl in der Seitenansicht und die Mittelwertbildung über seinen Querschnitt;
- Fig.6b: den auf eine Kante oder Ecke auftreffenden Messstrahl in der Draufsicht, die Mittelwertbildung über seinen Querschnitt und die dabei entstehende Messungenauigkeit;
- Fig.6c: den auf einen Winkel auftreffenden Messstrahl in der Draufsicht, die Mittelwertbildung über seinen Querschnitt und die dabei entstehende Messungenauigkeit;
- Fig.7a: ein Vermessungsgerät beim Vermessen einer Ecke in einem Raum;
- Fig.7b: das Vermessungsgerät beim Vermessen einer Raumecke über eine Anzielmarkierung auf der Anzielvorrichtung im Vermessungsmodus gemäss Fig.4b;
- Fig.8: ein von einem Benutzer handgehaltenes Vermessungsgerät beim Vermessen eines Tischwinkels über eine Anzielmarkierung auf der Anzielvorrichtung im Vermessungsmodus gemäss Fig.4a;
- Fig.9: ein insbesondere zur Anvisierung und Vermessung mit der erfindungsgemässen Anzielvorrichtung geeignetes, handgehaltenes elektro-optisches Laser-Vermessungsgerät;

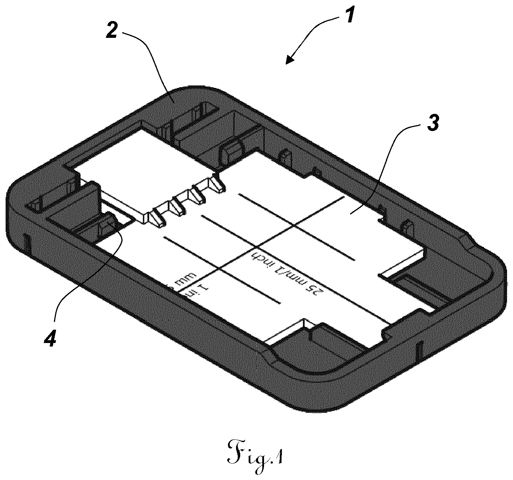

Figur 1 zeigt einen ersten Montagezustand der Anzielvorrichtung 1. Die Trägerplatte 2 ist derart ausgeformt, dass die Zieltafel 3 passgenau in ihr Platz findet und anhand zweier Schnappnasen 4 einrasten kann. Durch dieses Verstauen ist die Anzielvorrichtung sehr kompakt und kann durch den Benutzer beispielsweise in der Hosentasche untergebracht werden. Wird die Anzielvorrichtung wieder benötigt ist in wenigen Handgriffen der gewünschte Aufbau gemäss der folgenden Figuren möglich.

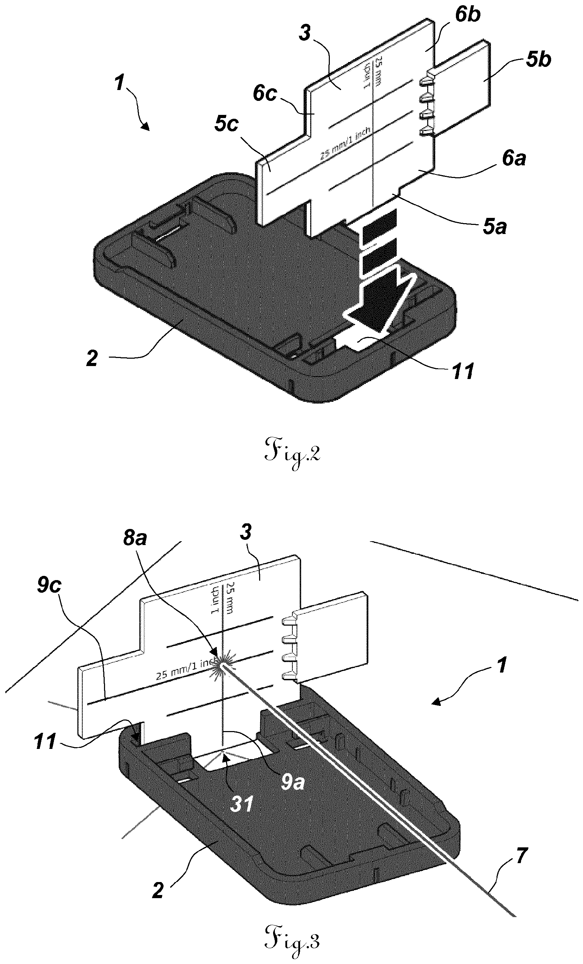

Figur 2 zeigt den Montagemechanismus für einen zweiten Montagezustand der Anzielvorrichtung 1. Hier wird gezeigt, wie die Zieltafel 3 in den Einstecksitz 11 der Trägerplatte 2 aufrecht eingesteckt wird. Zur Einpassung weist die Zieltafel 3 dafür einen Einsteckabsatz 5a auf, der gerade so lang ist, dass er nach Einstecken gemeinsam mit der Trägerplatte 2 schlüssig auf der Oberfläche aufliegt. Die Länge des Einsteckabsatzes 5a ist dafür begrenzt durch Schulterabsätze 6a, welche im Einstecksitz 11 auf einem Anschlag aufliegen. Die Ausformung der Einsteckabsätze 5a, 5b, 5c und Schulterabsätze 6a, 6b, 6c ist primär aber so gestaltet, dass sich die Zieltafel 3 stets korrekt und eindeutig in die Trägerplatte 2 einstecken lässt, um eine falsche Bedienung seitens des Benutzers und damit einhergehende Messfehler zu vermeiden.

Zum Durchführung einer Messung erfolgen also
- ein Einstecken der Zieltafel in den Einstecksitz,
- ein händisches Positionieren und Ausrichten der Anzielvorrichtung durch Anlegen der Anlagestelle (also z.B. etwa des Einsteckabsatzes) an den Oberflächenpunkt und
- ein Anzielen der Anzielmarkierung mit dem Vermessungsgerät.

In den Figuren 3 bis Figur 5b sollen nachfolgend verschiedene Vermessungsmodi und die dafür benötigten Montagezustände rein beispielhaft anhand einer Tischplatte verdeutlicht werden.

Figur 3 zeigt einen dritten Montagezustand der Anzielvorrichtung 1. Dieser Zustand unterscheidet sich vom zweiten Montagezustand nur insofern, dass die Zieltafel 3 um 180° um die Vertikalachse gedreht in den Einstecksitz 11 eingesteckt wird. Dieser Montagezustand kann nötig werden, je nachdem von welcher Position aus welche Stelle 31 auf einer Oberfläche vermessen werden soll. Befindet sich diese Stelle 31 beispielsweise in der Nähe eines Plattenrandes und dieser Plattenrand ist dem Vermessungsgerät abgewandt, so wird der in Figur 3 gezeigte Montagezustand für diesen Vermessungsmodus benötigt. Wäre der Plattenrand dem Vermessungsgerät hingegen zugewandt, würde für diesen Vermessungsmodus der Montagezustand aus Figur 2 nötig.

Mit an den Tisch angelegter Stirnseite des Einsteckabsatzes 5a wird anhand der Mittenmarkierung 9a die Anzielvorrichtung 1 am Trägerplattenboden an dem zu vermessenden Punkt 31 ausgerichtet. Die Zieltafel 3 muss dabei nicht zwingend die Oberfläche, die den zu vermessenden Punkt 31 aufweist, berühren, sondern kann z.B. auch durch einen Luftspalt von der Oberfläche getrennt sein, solange per Augenmass mit der Mittenmarkierung 9a genau genug auf den zu vermessenden Punkt gedeutet werden kann. Zudem sollte die Anzielvorrichtung 1 optimalerweise mit der die Anzielmarkierung 8a aufweisenden Seite der Zieltafel 3 dem Vermessungsgerät frontal gegenüberstehen. Mit dem Messstrahl 7 kann dann die Anzielmarkierung 8a - oder bei entsprechender Berücksichtigung des Höhenunterschiedes auch eine andere Anzielmarkierung (8b,8c) - anvisiert und vermessen werden.

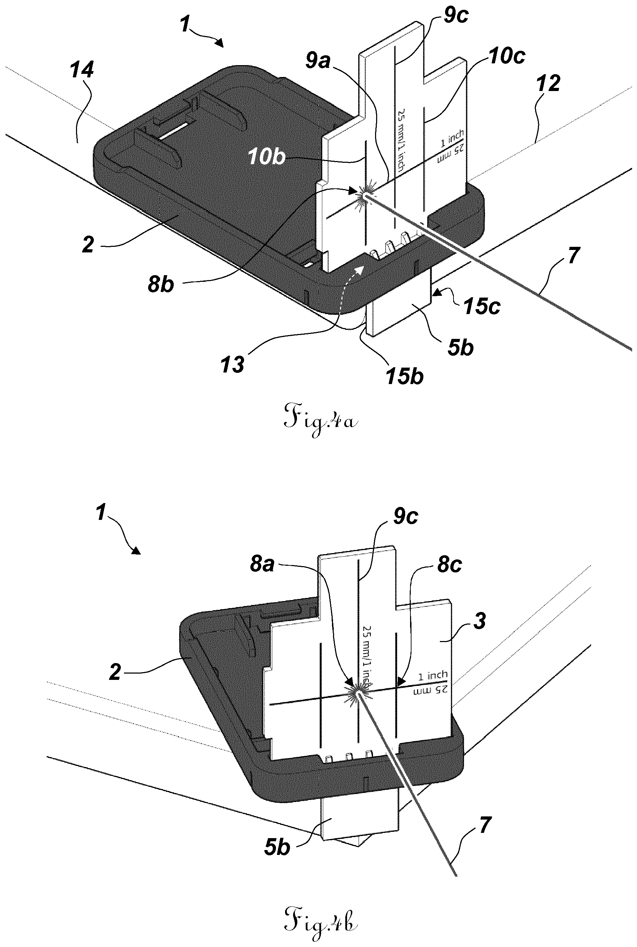

Die Figuren 4a und 4b zeigen einen vierten Montagezustand der Anzielvorrichtung 1. Dieser wird für das Vermessen von Kanten oder Ecken benötigt, die sich an einer dem Vermessungsgerät zugewandten Position befinden. In den selben in die Trägerplatte 2 eingearbeiteten Einstecksitz 11 wird die Zieltafel 3 diesmal mit einem weiteren Einsteckabsatz 5b eingesteckt, welcher deshalb länger ist, weil er als Anschlag bzw. als Anlegestelle für die Tischkante 12 fungiert. Zudem ist der Einsteckabsatz 5b zur Ebene der Anzielmarkierung 8b derart versetzt, dass die Hinterseite des Einsteckabsatzes 5b, also die Anlegestelle der Zieltafel 3, mit der Anzielmarkierung 8b in einer Ebene liegt. Wiederum begrenzen die (in dieser Ansicht im Einstecksitz 11 verborgenen) Schulterabsätze 6b längenmässig den Einschub und gewährleisten dabei, dass ein exakter Höhenbezug zwischen der Anzielmarkierung 8b und der Tischkante 12 bzw. Tischecke 13 hergestellt werden kann. Die Seitenmarkierung 10b, welche die Mittenmarkierung 9a kreuzt und damit die Anzielmarkierung 8b begründet, fluchtet exakt mit der Einsteckabsatzkante 15b, sodass der seitliche Bezug zu dem damit erfolgenden Anschlag gewährt wird. Entsprechend ist die Seitenmarkierung 10c ein "Repräsentant" für die seitliche Position der Einsteckabsatzkante 15c.

Der in Figur 4a gezeigte Vermessungsmodus ist insbesondere dienlich für die Vermessung einer dem Vermessungsgerät zugewandten Tischecke 13. Hierzu wird
- die Hinterseite des Einsteckabsatzes 5b an der Tischkante 12 angelegt und
- die Anzielvorrichtung 1 anhand der Einsteckabsatzkante 15b an der "um die Ecke" befindlichen Stirnfläche 14 der Tischplatte bzw. direkt am Eckpunkt 13 ausgerichtet.

Dadurch kann mit eindeutiger Referenzierung über ein festgesetztes, lotrechtes Distanz-Offset (25mm im Beispiel), welches dem Vermessungsgerät für eine automatische Berücksichtigung idealerweise bereits bekannt ist, die Anzielmarkierung 8b mit dem Messstrahl 7 anvisiert und vermessen werden.

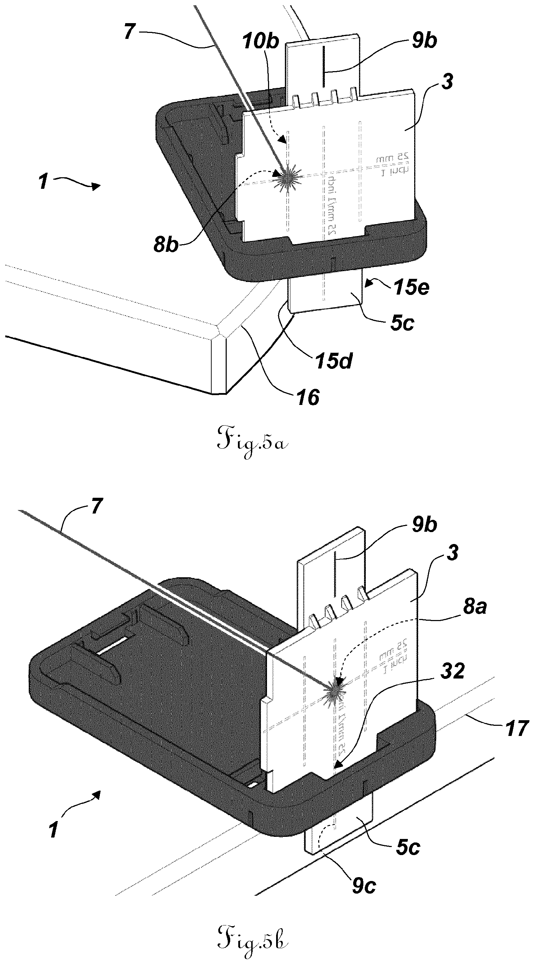

Figur 4b zeigt einen Vermessungsmodus, in welchem ebenfalls der vierte Montagezustand verwendet wird. Auch wird hier eine Tischecke 13 vermessen, jedoch aus einer anderen Perspektive. Hierzu wird
- die Hinterseite des Einsteckabsatzes 5b an der Tischecke angelegt und die Anzielvorrichtung 1 anhand einer auf der Hinterseite des Einsteckabsatzes 5b befindlichen Mittenmarkierung 9b (sichtbar in Fig.5a) am Trägerplattenboden an der Tischecke 13 ausgerichtet und
- die Anzielvorrichtung 1 durch Rotieren um die Tischecke 13 so ausgerichtet, dass der auf die Zieltafel 3 gerichtete Messstrahl 7 möglichst orthogonal auftrifft.

Die Mittenmarkierung 9b dient also gleichzeitig als Anlegestelle und als Ausrichthilfe. Dadurch kann wieder mit eindeutiger Referenzierung über ein festgesetztes, lotrechtes Distanz-Offset (25mm im Beispiel), welches dem Vermessungsgerät für eine automatische Berücksichtigung idealerweise bereits bekannt ist, die Anzielmarkierung 8a mit dem Messstrahl 7 anvisiert und vermessen werden. Die Mittenmarkierungen 9b und 9c fluchten zueinander, weshalb die auf der Mittenmarkierung 9c befindliche Anzielmarkierung 8a einen definierten Bezug zum zu vermessenden Eckpunkt 13 liefert.

Die Figuren 5a und 5b zeigen einen fünften Montagezustand der Anzielvorrichtung 1. Dieser wird ebenfalls für das Vermessen von Kanten oder Ecken benötigt, die sich an einer dem Vermessungsgerät abgewandten Position befinden. In den selben vorgesehenen Einstecksitz 11 der Trägerplatte 2 wird die Zieltafel 3 diesmal mit einem weiteren, bezüglich der Ebene der Anzielmarkierungen "gerade durchgehenden" Einsteckabsatz 5c eingesteckt, welcher ebenfalls als Anschlag bzw. als Anlegestelle für die Tischkante 16 fungiert und bevorzugt dem Einsteckabsatz 5b aus Figuren 4a und 4b gegenüberliegt. Dadurch ergibt sich der Vorteil, dass die Anzielmarkierungen auch für diesen Vermessungsmodus verwendet werden können. Die Vorderseite des Einsteckabsatzes 5c liegt mit den Anzielmarkierungen in einer Ebene. Wiederum begrenzen Schulterabsätze 6c längenmässig den Einschub und gewährleisten gleichzeitig, dass ein exakter Bezug zwischen den Anzielmarkierungen und der Tischkante 16 bzw. einer Tischecke hergestellt werden kann.

Der in Figur 5a gezeigte Vermessungsmodus ist insbesondere dienlich für die Vermessung einer dem Vermessungsgerät abgewandten Tischkante, insbesondere für die Vermessung eines bestimmten Punktes an einer nicht geraden, z.B. gebogenen Kante 16. Die Vermessung findet hier aus einer zur Kante (bzw. zur Kantentangente am zu vermessenden Punkt) nicht senkrechten, sondern aus einer schrägen Perspektive. Hierzu wird
- die Einsteckabsatzkante 15d so an der Tischkante 16 angelegt, dass sie ggf. auf einen zu vermessenden Punkt an der Kante 16 deutet, und
- die Anzielvorrichtung 1 durch Rotieren um die Einsteckabsatzkante 15d so ausgerichtet, dass der auf die Zieltafel 3 gerichtete Vermessungsstrahl 7 möglichst orthogonal auftrifft.

Dadurch kann wieder mit eindeutiger Referenzierung über einen definierten, lotrechten Distanz-Versatz (25mm im Beispiel), welcher dem Vermessungsgerät für eine automatische Berücksichtigung idealerweise bereits bekannt ist, die Anzielmarkierung 8b mit dem Messstrahl 7 anvisiert und vermessen werden. Die Seitenmarkierung 10b, welche die Mittenmarkierung 9a kreuzt und damit die

Anzielmarkierung 8b begründet, fluchtet exakt mit der Einsteckabsatzkante 15d, sodass der seitliche Bezug zu dem damit erfolgenden Anschlag gewährt wird. Entsprechend ist die Seitenmarkierung 10c ein "Repräsentant" für die seitliche Position der Einsteckabsatzkante 15e, welche ebenfalls als Anlegestelle benutzt werden kann.

Figur 5b zeigt einen Vermessungsmodus, in welchem ebenfalls der fünfte Montagezustand verwendet wird. Hier wird eine Stelle 32 an einer geraden Tischkante 17 vermessen, diesmal jedoch aus einer zur Tischkante 17 senkrechten Perspektive. Hierzu wird
- die - die Mittenmarkierung 9c aufweisende - Vorderseite des Einsteckabsatzes 5c an der Tischecke 17 angelegt und
- gegebenenfalls die Anzielvorrichtung 1 anhand der am Trägerplattenboden zumindest teilweise sichtbaren Mittenmarkierung 9c an einem spezifischen zu vermessenden Punkt 32 an der Tischkante 17 ausgerichtet.

Dadurch kann wieder mit eindeutiger Referenzierung über ein festgesetztes, lotrechtes Distanz-Offset (25mm im Beispiel), welches dem Vermessungsgerät für eine automatische Berücksichtigung idealerweise bereits bekannt ist, die Anzielmarkierung 8a mit dem Messstrahl 7 anvisiert und vermessen werden. Soll kein spezifischer Punkt an der Kante vermessen werden, sondern bloss die Distanz zur Kante, so kann eine andere Anzielmarkierung oder eine beliebige Stelle auf der Zieltafel 3 anvisiert werden.

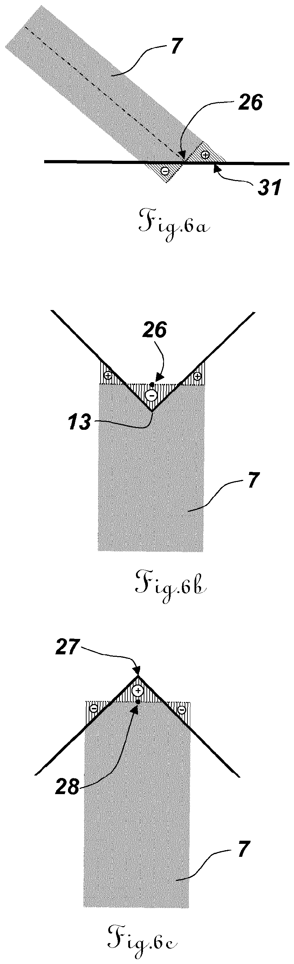

Figuren 6a bis 6c zeigen die durch die erfindungsgemässe Anzielvorrichtung lösbaren Problematiken.

Figur 6a zeigt den Messstrahl 7 beim Auftreten auf eine Oberfläche in der Seitenansicht. Der gemessene Punkt 26 befindet sich stets an der Mitte des Messstrahls 7, weil sich die Differenzen zwischen den vorderen, früher auf die Oberfläche auftretenden und reflektierten Lichtstrahlen und den hinteren, später auf die Oberfläche auftretenden und reflektierten Lichtstrahlen aufgrund einer Mittelwertbildung gegenseitig aufheben. Somit muss die zu vermessende Stelle 31 auf der Oberfläche exakt mit der Mitte des Messstrahls anvisiert werden. Dies kann zur in Figur 6a gezeigten Abweichung führen. Obwohl der Messstrahl 7 die Stelle 31 "abdeckt", entsteht eine Messabweichung.

Figur 6b zeigt die Abweichung zwischen dem eigentlich zu messenden Eckpunkt 13 (es könnte auch ein Kantenpunkt sein), und dem tatsächlich gemessenen Punkt 26, der aufgrund der Mittelung aller vom Messstrahl 7 erzeugten Reflektionen als zu weit weg ermittelt wird.

Figur 6c zeigt die Abweichung zwischen dem eigentlich zu messenden Winkelpunkt 27 ("innere" Kante oder Ecke), und dem tatsächlich gemessenen Punkt 28, der aufgrund der Mittelung aller vom Messstrahl 7 erzeugten Reflektionen als zu weit weg ermittelt wird.

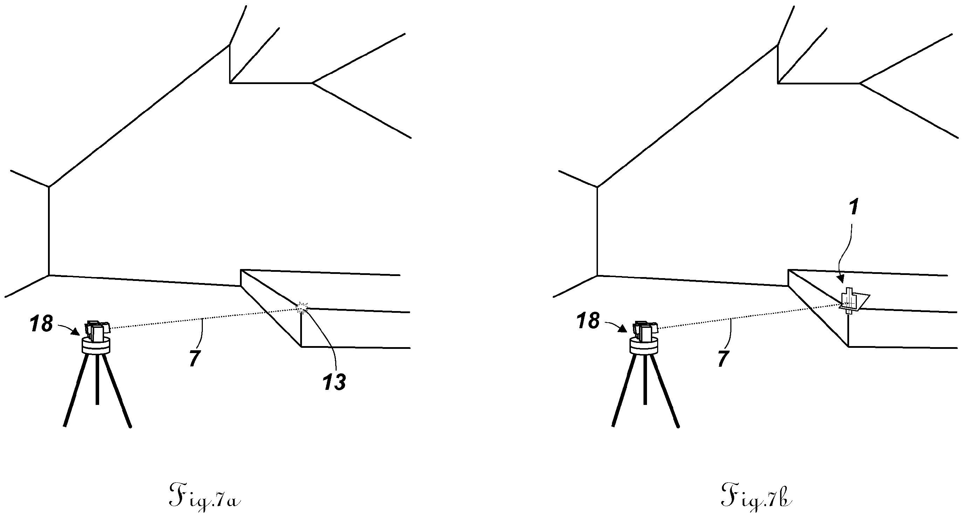

Die Figuren 7a und 7b zeigen ein weiteres Anwendungsbeispiel der Anzielvorrichtung 1 in einem Raum. Hier kann mithilfe der Anzielvorrichtung 1 gemäss Figur 4b die Vermessung einer Raumecke 13 erleichtert werden.

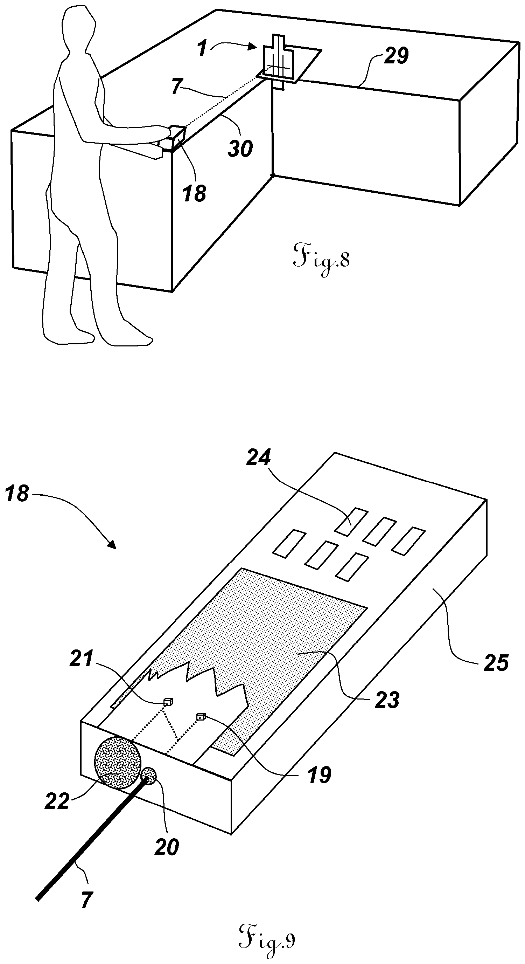

Figur 8 zeigt ein Anwendungsbeispiel zu dem in Figur 4a bzw. 6c gezeigten Prinzip. Hierzu wird
- die Hinterseite des Einsteckabsatzes 5b an der Tischkante 29 angelegt und
- die Anzielvorrichtung 1 anhand der linken Einsteckabsatzkante 15b an der "um die Ecke" befindlichen Kante 30 ausgerichtet.

Nun kann die Anzielmarkierung 8b anvisiert und vermessen werden, beispielsweise durch ein vom Benutzer handgehaltenes Vermessungsgerät 18.

Figur 9 zeigt ein als handgehaltenes Laserentfernungsmessgerät ausgeführtes elektro-optisches Messgerät. Dieses weist ein Gehäuse 25 und Betätigungselemente 24 zum Ein- bzw. Ausschalten des Entfernungsmessgeräts sowie zum Starten bzw. Konfigurieren eines Messvorgangs auf. Neben den Betätigungselementen besitzt das Messgerät ein Display 23 zur Wiedergabe von Messergebnissen und Angaben des Gerätestatus. Schematisch und prinzipiell angedeutet weist das Gerät einen Sendepfad mit einem Sender 19 zur Aussendung von optischen Messstrahlen 7 und einem Austrittsfenster 20 dafür sowie einen Empfangspfad mit einem Empfänger 21 und einer Empfangsoptik 22 auf.

Die Messung von Distanzen erfolgt nach aus dem Stand der Technik bekannten Prinzipien, wie z.B. dem Pulslaufzeit-oder Phasenvergleichsprinzip.

Der Laserentfernungsmesser kann ausserdem weitere aus dem Stand der Technik bekannte und fachübliche Komponenten oder Funktionen aufweisen.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Anzielvorrichtung (1) zur Bereitstellung eines Substitutionszieles natürlicher Gestalt für die Einzelpunktmessung von Oberflächenpunkten (13,31,32) mit einem elektro-optischen Vermessungsgerät (18), aufweisend
• eine Trägerplatte (2) mit mindestens einem Einstecksitz (11) und
• eine Zieltafel (3) mit
o mindestens einer definierten Anlegestelle zum Angelegtwerden an den zu vermessenden Oberflächenpunkt (13,31,32) und
o mindestens einer Anzielmarkierung (8a,8b,8c),
wobei die Zieltafel (3) in den Einstecksitz (11) der Trägerplatte (2) einsteckbar ist,
wobei
die mindestens eine Anzielmarkierung (8a,8b,8c) bezüglich ihrer Position auf der Zieltafel (3) so mit der mindestens einen definierten Anlegestelle in vordefinierter räumlicher Korrelation steht, dass in eingestecktem und an den Oberflächenpunkt (13,31,32) angelegtem Zustand der Anzielvorrichtung (1) ein solcher - durch die Anzielmarkierung (8a,8b,8c) verkörperter - Raumpunkt vermessbar ist, der die wahre Position des Oberflächenpunktes (13;31;32) mit einem
• vordefinierten und
• vom Vermessungsgerät (18) zumindest teilweise automatisch in die Messung einbeziehbaren Versatz beschreibt.

2. Anzielvorrichtung (1) nach einem der vorherigen Ansprüche,
**dadurch gekennzeichnet, dass**
die Zieltafel (3) aufweist
• mindestens einem Einsteckabsatz (5a,5b,5c), welcher die mindestens eine Anlegestelle oder mehrere Anlegestellen bildet, und
• sich an den mindestens einen Einsteckabsatz (5a,5b,5c) anschliessenden Schulterabsätzen (6a;6b;6c),
sodass die Zieltafel (3)
• anhand des mindestens einen Einsteckabsatzes (5a,5b,5c) und
• durch die dazugehörigen Schulterabsätze (6a,6b,6c) begrenzt in den Einstecksitz (11) der Trägerplatte (2) einsteckbar ist.

3. Anzielvorrichtung (1) nach einem der vorherigen Ansprüche,
**dadurch gekennzeichnet, dass**
die Zieltafel (3) mindestens eine nicht mittig positionierte Seitenmarkierung (10b;10c) und mindestens eine mittig positionierte, insbesondere mittig auf dem mindestens einen Einsteckabsatz (5a;5b;5c) positionierte Mittenmarkierung (9a;9b;9c) aufweist und die Anzielmarkierung (8a;8b;8c) gebildet wird von
• der mindestens einen Seitenmarkierung (10b;10c), welche die mindestens eine Mittenmarkierung (9a) kreuzt bzw.
• zwei sich kreuzenden Mittenmarkierungen (9a,9c).

4. Anzielvorrichtung (1) nach einem der vorherigen Ansprüche,
**dadurch gekennzeichnet, dass**
der mindestens eine Einsteckabsatz (5a;5b;5c) über mindestens eine, von der Stirnseite zu den Schulterabsätzen (6a;6b;6c) führende Einsteckabsatzkante (15b,15d;15c,15e) verfügt, deren Länge den Einsteckweg definiert begrenzt.

5. Anzielvorrichtung (1) nach einem der vorherigen Ansprüche,
**dadurch gekennzeichnet, dass**
die mindestens eine
Einsteckabsatzkante (15b,15d;15c,15e) mit der mindestens einen Anzielmarkierung (8a;8b;8c)
• bezüglich ihrer Position in Korrelation steht, und
• insbesondere in einer Ebene liegt.

6. Anzielvorrichtung (1) nach einem der vorherigen Ansprüche,
**dadurch gekennzeichnet, dass**
die mindestens eine
Einsteckabsatzkante (15b,15d;15c,15e) mit der mindestens einen Seitenmarkierung (10b;10c)
• bezüglich ihrer Position in Korrelation steht, und
• insbesondere fluchtet.

7. Anzielvorrichtung (1) nach einem der vorherigen Ansprüche,
**dadurch gekennzeichnet, dass**
der mindestens eine Einsteckabsatz (5a;5b;5c) nach Einstecken der Zieltafel (3) in den Einstecksitz (11) am Trägerplattenboden anhand der auf dem Einsteckabsatz (5a;5b;5c) befindlichen Mittenmarkierung (9a;9b;9c) zum Anlegen und insbesondere zum Ausrichten der Anzielvorrichtung (1) an Oberflächenpunkten (13;31;32) nutzbar ist.

8. Anzielvorrichtung (1) nach einem der vorherigen Ansprüche,
**dadurch gekennzeichnet, dass**
nach Einstecken der Zieltafel (3) in den Einstecksitz (11) der mindestens eine Einsteckabsatz (5a;5b;5c) durch die Schulterabsätze (6a;6b;6c) begrenzt zumindest teilweise in die Trägerplatte (2) so weit eindringt, dass die Höhendistanz zwischen Trägerplattenboden und Anzielmarkierung (8a;8b;8c) definiert und bekannt ist.

9. Anzielvorrichtung (1) nach einem der vorherigen Ansprüche,
**dadurch gekennzeichnet, dass**
der Einsteckabsatz (5a;5b;5c) nach Einstecken der Zieltafel (3) in den Einstecksitz (11) die Trägerplatte (2) über ihren Boden hinaus durchdringt und am besagten Trägerplattenboden anhand mindestens einer seiner mindestens einen Einsteckabsatzkante (15b;15c;15d;15e) zum Anlegen und insbesondere zum Ausrichten der Anzielvorrichtung (1) an zu vermessenden Punkten (13;32) an Kanten (12) und Ecken (13) nutzbar ist.

10. Anzielvorrichtung (1) nach einem der vorherigen Ansprüche,
**dadurch gekennzeichnet, dass**
die Anzielvorrichtung (1) dem Vermessungsgerät (18) nicht zugewandte, insbesondere verdeckte Punkte (13;32) vermessbar macht, indem sie anhand von referenzierten Anzielmarkierungen (8a,8b,8c) Substitutionspunkte zur Verfügung stellt, welche durch ihren vordefinierten Versatz zur Bezugsebene einen hochgenauen Rückschluss auf die eigentlich zu vermessenden Punkte erlauben.

## Claims

1. Targeting device (1) for providing a substitution target of natural shape for the individual-point measurement of surface points (13,31,32) with an electro-optical measuring apparatus (18), comprising
• a carrier plate (2) having at least one insertion seat (11), and
• a target panel (3) having
o at least one defined placement location for being placed onto the surface point (13,31,32) to be measured, and
o at least one targeting marking (8a,8b,8c),
wherein the target panel (3) is insertable into the insertion seat (11) of the carrier plate (2),
wherein
the at least one targeting marking (8a,8b,8c), with regard to the position thereof on the target panel (3), is in predefined spatial correlation with the at least one defined placement location in such a way that, in the inserted state of the targeting device (1) placed onto the surface point (13,31,32), such a spatial point - embodied by the targeting marking (8a,8b,8c) - is measurable which describes the true position of the surface point (13;31;32) with an offset that
• is predefined and
• is includable in the measurement at least partly automatically by the measuring apparatus (18).

2. Targeting device (1) according to any one of the preceding claims,
**characterized in that**
the target panel (3) comprises
• at least one insertion extension (5a,5b,5c) forming the at least one placement location or a plurality of placement locations, and
• shoulder extensions (6a;6b;6c) adjacent to the at least one insertion extension (5a,5b,5c), such that the target panel (3) is insertable into the insertion seat (11) of the carrier plate (2)
• with the aid of the at least one insertion extension (5a,5b,5c) and
• in a manner delimited by the associated shoulder extensions (6a,6b,6c).

3. Targeting device (1) according to any one of the preceding claims,
**characterized in that**
the target panel (3) comprises at least one non-centrally positioned side marking (10b;10c) and at least one centrally positioned center marking (9a;9b;9c), in particular positioned centrally on the at least one insertion extension (5a;5b;5c), and the targeting marking (8a;8b;8c) is formed by
• the at least one side marking (10b;10c) which intersects the at least one center marking (9a), or
• two intersecting center markings (9a,9c).

4. Targeting device (1) according to any one of the preceding claims,
**characterized in that**
the at least one insertion extension (5a;5b;5c) has at least one insertion extension edge (15b,15d;15c,15e) which leads from the face side to the shoulder extensions (6a;6b;6c) and whose length delimits the insertion travel in a defined manner.

5. Targeting device (1) according to any one of the preceding claims,
**characterized in that**
the at least one insertion extension edge (15b,15d;15c,15e)
• is correlated with regard to its position, and
• in particular lies in one plane with the at least one targeting marking (8a;8b;8c).

6. Targeting device (1) according to any one of the preceding claims,
**characterized in that**
the at least one insertion extension edge (15b,15d;15c,15e)
• is correlated with regard to its position, and
• in particular is in alignment with the at least one side marking (10b;10c).

7. Targeting device (1) according to any one of the preceding claims,
**characterized in that**
the at least one insertion extension (5a;5b;5c), after insertion of the target panel (3) into the insertion seat (11) at the carrier plate base with the aid of the center marking (9a;9b;9c) situated on the insertion extension (5a;5b;5c), is usable for placement and in particular for alignment of the targeting device (1) on surface points (13;31;32).

8. Targeting device (1) according to any one of the preceding claims,
**characterized in that**
after insertion of the target panel (3) into the insertion seat (11), the at least one insertion extension (5a;5b;5c), in a manner delimited by the shoulder extensions (6a;6b;6c), at least partly penetrates into the carrier plate (2) to an extent such that the height distance between carrier plate base and targeting marking (8a;8b;8c) is defined and known.

9. Targeting device (1) according to any one of the preceding claims,
**characterized in that**
the insertion extension (5a;5b;5c), after insertion of the target panel (3) into the insertion seat (11), penetrates through the carrier plate (2) beyond the base thereof and, at said base of the carrier plate with the aid of at least one of its at least one insertion extension edge (15b;15c;15d;15e), is usable for placement and in particular for alignment of the targeting device (1) on points (13;32) to be measured at edges (12) and corners (13).

10. Targeting device (1) according to any one of the preceding claims,
**characterized in that**
points (13;32) not facing the measuring apparatus (18), in particular hidden points, are made measurable by the targeting device (1) by virtue of the latter making available, with the aid of referenced targeting markings (8a,8b,8c), substitution points which, as a result of their predefined offset with respect to the reference plane, allow a highly accurate conclusion to be drawn about the points actually to be measured.

## Revendications

1. Dispositif de ciblage (1) pour la mise à disposition d'une cible de substitution de configuration naturelle pour la mesure de points individuels de points de surface (13, 31, 32) avec un appareil de mesure électro-optique (18) qui présente
• une plaque de support (2) avec au moins un logement d'emboîtement (11) et
• une plaque de mire (3) avec
o au moins un point d'appui défini pour être mis en appui sur le point de surface à mesurer (13, 31, 32) et
o au moins un marquage de ciblage (8a, 8b, 8c),
cependant que la plaque de mire (3) peut être emboîtée dans le logement d'emboîtement (11) de la plaque de support (2),
cependant que le marquage de ciblage qui existe au moins (8a, 8b, 8c) est en corrélation spatiale prédéfinie pour ce qui est de sa position sur la plaque de mire (3) avec le point d'appui défini qui existe au moins de telle manière que, lorsque le dispositif de ciblage (1) est à l'état emboîté et en appui sur le point de surface (13, 31, 32), un tel point de l'espace - matérialisé par le marquage de ciblage (8a, 8b, 8c) - qui décrit la vraie position du point de surface (13 ; 31 ; 32) avec un
• décalage prédéfini et
• qui peut être intégré par l'appareil de mesure (18) au moins partiellement automatiquement dans la mesure
peut être mesuré.

2. Dispositif de ciblage (1) selon l'une des revendications précédentes, **caractérisé en ce que** la plaque de mire (3) présente
• au moins un talon d'emboîtement (5a, 5b, 5c) qui forme le point d'appui qui existe au moins ou plusieurs points d'appui et
• des talons d'épaulement (6a ; 6b ; 6c) qui se rattachent au talon d'emboîtement qui existe au moins (5a, 5b, 5c)
si bien que la plaque de mire (3) peut être emboîtée dans le logement d'emboîtement (11) de la plaque de support (2)
• à l'aide du talon d'emboîtement qui existe au moins (5a, 5b, 5c) et
• en étant limitée par les talons d'épaulement correspondants (6a, 6b, 6c).

3. Dispositif de ciblage (1) selon l'une des revendications précédentes, **caractérisé en ce que** la plaque de mire (3) présente au moins un marquage latéral qui n'est pas positionné au milieu (10b ; 10c) et au moins un marquage du milieu (9a ; 9b ; 9c) qui est positionné au milieu, en particulier au milieu sur le talon d'emboîtement qui existe au moins (5a ; 5b ; 5c ;) et que le marquage de ciblage (8a ; 8b ; 8c) est formé par
• le marquage latéral qui existe au moins (10b ; 10c) qui croise le marquage du milieu qui existe au moins (9a) ou par
• deux marquages du milieu qui se croisent (9a, 9c).

4. Dispositif de ciblage (1) selon l'une des revendications précédentes, **caractérisé en ce que** le talon d'emboîtement qui existe au moins (5a ; 5b ; 5c ;) dispose d'au moins un bord de talon d'emboîtement (15b, 15d ; 15c, 15e) qui mène du côté frontal aux talons d'épaulement (6a ; 6b ; 6c), bord de talon dont la longueur délimite le trajet d'emboîtement de manière définie.

5. Dispositif de ciblage (1) selon l'une des revendications précédentes, **caractérisé en ce que** le bord de talon d'emboîtement qui existe au moins (15b, 15d ; 15c, 15e)
• est en corrélation pour ce qui est de sa position et
• est en particulier situé dans un plan
avec le marquage de ciblage qui existe au moins (8a ; 8b ; 8c).

6. Dispositif de ciblage (1) selon l'une des revendications précédentes, **caractérisé en ce que** le bord de talon d'emboîtement qui existe au moins (15b, 15d ; 15c, 15e)
• est en corrélation pour ce qui est de sa position et
• est en particulier aligné
avec le marquage latéral qui existe au moins (10b ; 10c).

7. Dispositif de ciblage (1) selon l'une des revendications précédentes, **caractérisé en ce que** le talon d'emboîtement qui existe au moins (5a ; 5b ; 5c ;) peut être utilisé, après que la plaque de mire (3) ait été emboîtée dans le logement d'emboîtement (11), sur le fond de la plaque de support à l'aide du marquage de milieu (9a ; 9b ; 9c) qui se trouve sur le talon d'emboîtement (5a ; 5b ; 5c ;) pour prendre appui et en particulier pour aligner le dispositif de ciblage (1) sur des points de surface (13 ; 31 ; 32).

8. Dispositif de ciblage (1) selon l'une des revendications précédentes, **caractérisé en ce que** le talon d'emboîtement qui existe au moins (5a ; 5b ; 5c ;) pénètre, après que la plaque de mire (3) ait été emboîtée dans le logement d'emboîtement (11), au moins partiellement dans la plaque de support (2) en étant limité par les talons d'épaulement (6a ; 6b ; 6c) jusqu'à ce que la distance en hauteur entre le fond de la plaque de support et le marquage de ciblage (8a ; 8b ; 8c) soit définie et connue.

9. Dispositif de ciblage (1) selon l'une des revendications précédentes, **caractérisé en ce que** le talon d'emboîtement (5a ; 5b ; 5c ;) pénètre, après que la plaque de mire (3) ait été emboîtée dans le logement d'emboîtement (11), pénètre dans la plaque de support (2) en faisant saillie au-delà de son fond et peut être utilisé sur ledit fond de plaque de support au moyen d'au moins l'un de ses bords de talon d'emboîtement qui existe au moins (15, ; 15c ; 15d ; 15e) pour prendre appui et en particulier pour aligner le dispositif de ciblage (1) sur des points devant être mesurés (13 ; 32) sur des bords (12) et des coins (13).

10. Dispositif de ciblage (1) selon l'une des revendications précédentes, **caractérisé en ce que** le dispositif de ciblage (1) rend mesurables des points (13 ; 32) qui ne sont pas tournés vers l'appareil de mesure (18), en particulier des points cachés, en mettant à disposition des points de substitution à l'aide de marquages de ciblage référencés (8a, 8b, 8c), points de substitution qui, de par leur décalage prédéfini par rapport au plan de référence, permettent une conclusion de haute précision sur les points qui doivent effectivement être mesurés.
